Europäisches Patentamt

(19) European Patent Office

Office européen des brevets

(11) EP 0 836 807 B1

(12) **FASCICULE DE BREVET EUROPEEN**

(45) Date de publication et mention
de la délivrance du brevet:
**21.08.2002 Bulletin 2002/34**

(51) Int Cl.⁷: **A23L 1/18**, B65D 81/34

(21) Numéro de dépôt: **97402431.7**

(22) Date de dépôt: **15.10.1997**

(54) **Produit alimentaire de type pellet expansable aux micro-ondes, dans son emballage de type suscepteur, et procédé d'obtention**

Durch Mikrowellen puffbares, pelletförmiges Nahrungsmittel in einer Suszeptorverpackung, und Verfahren seiner Herstellung

Microwave-puffable pellet-shaped food product in a susceptor package, and process for making it

(84) Etats contractants désignés:
**BE CH DE DK ES FI FR GB IT LI NL SE**

(30) Priorité: **16.10.1996 FR 9612640**

(43) Date de publication de la demande:
**22.04.1998 Bulletin 1998/17**

(73) Titulaire: **Ulice**
**63204 Riom Cedex (FR)**

(72) Inventeurs:
• **Despre, Denis J.C.**
**63200 Riom (FR)**

• **Messager, Arnaud**
**63200 Riom (FR)**

(74) Mandataire: **Nevant, Marc et al**
**Cabinet Beau de Loménie,**
**158, rue de l'Université**
**75340 Paris Cedex 07 (FR)**

(56) Documents cités:
EP-A- 0 338 239          GB-A- 1 139 762
US-A- 4 904 488          US-A- 5 108 772
US-A- 5 165 950

## Description

L'invention concerne le domaine alimentaire. Plus particulièrement, l'invention concerne un procédé de préparation d'un produit alimentaire de type "pellet" expansable sous l'action des micro-ondes.

Les pellets sont des produits à base d'amidon cuits et séchés destinés au "snacking". Ces produits sont des produits intermédiaires obtenus par cuisson/extrusion, qui nécessitent une étape de transformation supplémentaire. Ces pellets, trop durs pour être consommés tels quels, sont expansés industriellement par friture ou air chaud. Ainsi, le pellet plongé dans une huile à 200°C (une dizaine de secondes) entraîne une vaporisation de l'eau se matérialisant par une expansion du produit ; le pellet devient alors un produit de snacking consommable très alvéolé et de faible densité, un exemple de ce genre de produit étant le beignet de crevette.

Le pellet est défini par sa formulation à base d'amidon, son intensité de cuisson, sa forme et son humidité finale, qui conditionnent directement le niveau d'expansion du produit et donc sa texture.

Ces pellets sont généralement obtenus à l'aide de 2 extrudeurs. Le premier extrudeur sert à gélatiniser l'amidon pour lui donner un état "fondu ou pseudo-plastique". C'est l'association de l'énergie thermique apportée par le chauffage et de l'énergie mécanique apportée par le cisaillement lié à la configuration des vis qui permet en milieu hydraté de gélatiniser l'amidon. Les barèmes de température et de pression sont tels que le produit avant sa sortie de l'extrudeur doit être à une pression et à une température faibles (< 100 bars, < 70° C) pour éviter une expansion à ce niveau.

En sortie d'extrudeur, des granulés de matières amylacée dans un état "fondu" sont coupés et transférés au second extrudeur.

Cet extrudeur va pousser ces granulés à travers une filière et former le pellet final, dont la forme est conditionnée par le choix de la filière. Les pellets extrudés sont préséchés pour éviter qu'ils ne collent entre eux puis séchés jusqu'à la teneur en humidité voulue.

2 ouvrages de référence mentionnent le procédé d'obtention des pellets :

* SNACK FOOD, édité par R. Cordon Booth, publié par Van Nostrand Reinhold, New Yord (1990).
* EXTRUSION COOKING, édité par C. Mercier, P. Linko, J.M. Harper, publié par American Association of Cereal Chemist, AACC Inc. St Paul, Minnesota (1989).

A la connaissance de la Demanderesse, il n'existe pas à ce jour de produit alimentaire de type "pellet" consommable après expansion au four micro-ondes et donc directement accessible au consommateur.

On connait d'après EP-A-0 375 006 un produit alimentaire de snacking pouvant être soufflé et se dilater sous l'effet du chauffage aux micro-ondes, comprenant un noyau solide, partiellement cuit, pouvant être soufflé et se dilater, comprenant un amidon de tapioca pré-gélifié et/ou naturel, ayant une teneur en humidité allant de 12 à 16 % en poids, ledit noyau étant enrobé d'un enduit adhésif de pâte cuite, pouvant être soufflé et ne pouvant pas se dilater.

Toutefois, la structure "bi-couche" de ce produit ne correspond pas à celle d'un pellet.

On connait également d'après EP-A-0 331 820 une méthode pour préparer des produits de snack croustillants expansés ayant une teneur en humidité comprise entre 1 et 7 % en poids, dans laquelle l'expansion est effectuée au moyen d'air chaud.

On connait par ailleurs d'après US-A-5, 165,950 un procédé de préparation d'un produit semi-fini expansable aux micro-ondes, qui comprend l'extrusion et le séchage d'un mélange de farine, d'amidon et d'eau ayant une teneur en humidité comprise entre 22 et 24 % en poids.

EP-A-0 338 239 divulgue un procédé pour préparer des produits semi-finis expansable aux micro-ondes, US-A-4 904 488 divulgue un procédé de preparation de pop-corn sous l'effet des micro-ondes et GB-A-1 139 762 divulgue un procédé pour préparer un produit de snack.

Un objet de l'invention est de fournir un produit alimentaire de type pellet susceptible d'expansion sous l'action des micro-ondes qui présente des propriétés organoleptiques améliorées lorsqu'il est consommé chaud.

Un autre objet de l'invention est de fournir un produit alimentaire de type pellet susceptible d'expansion sous l'action des micro-ondes qui ne contienne pas de matières grasses.

Ainsi, l'invention concerne un procédé de préparation d'un produit alimentaire de type pellet expansable sous l'action des micro-ondes, qui contient au moins 40 % d'amidon, ledit produit ayant une teneur en humidité comprise entre 9 et 11,5 % en poids et un degré de gélatinisation d'au moins 75 %, de préférence d'au moins 80 %, ledit produit alimentaire étant conditionné dans. un emballage de type suscepteur qui présente de préférence de très bonnes propriétés barrières à l'humidité (perméabilité à l'eau < 10 g/m$^2$/24h, de préférence < g/m$^2$/24h à 38° sous une humidité relative de 90 %), ce procédé consistant à :

> a) extruder dans un premier extrudeur le mélange des composants avec une teneur en humidité comprise entre 29 et 35 % en poids, en apportant une énergie mécanique comprise entre 50 et 400 kWh/t et une énergie thermique comprise entre 10 et 150 kWh/t;

b) couper en sortie de premier extrudeur des granulés de matière extrudée et les transférer vers un second extrudeur ;

c) extruder lesdits granulés pour obtenir en sortie de second extrudeur des pellets de forme désirée ;

d) présécher les pellets jusqu'à une teneur en humidité de 20 à 25 % en poids, puis les sécher jusqu'à une teneur en humidité comprise entre 9 et 11,5 % en poids ; et

e) conditionner les pellets obtenus dans un emballage de type suscepteur.

Selon un mode de réalisation préféré de l'invention, le produit alimentaire contient une gomme, en une quantité comprise généralement entre 0,1 et 1 % en poids du poids total de la composition dudit produit.

Un exemple avantageux du produit alimentaire conforme à l'invention a la composition suivante :

* 40 à 99,7 % en poids de matière contenant de l'amidon
* 0 à 20 % en poids d'amidon natif ou modifié
* 0 à 25 % en poids de fibres
* 0 à 20 % en poids de poudre de légumes
* 0 à 20 % en poids de sucre
* 0,1 à 5 % en poids de sel
* 0,1 à 1 % en poids de gommes
* 0,1 à 3 % en poids d'arômes hydrosolubles et/ou liposolubles,

la somme de ces constituants étant égale à 100 %, ledit produit alimentaire ayant une teneur en humidité comprise 9 et 11,5 % en poids et un degré de gélatinisation d'au moins 75 %, de préférence d'au moins 80 %.

Ce produit alimentaire peut se présenter sous forme de produit sucré, par exemple sous forme de céréales prêtes à consommer (CPAC) pour le petit déjeuner ou sous forme de produit salé, par exemple de produit salé pour apéritif (PSA). Dans le premier cas, le produit alimentaire conforme à l'invention contient avantageusement de 40 à 95 % en poids d'amidon et possède de préférence un degré de gélatinisation d'au moins 85 %. Dans le second cas, le produit alimentaire conforme à l'invention contient avantageusement de 50 à 95 % en poids d'amidon et possède de préférence un degré de gélatinisation d'au moins 90 %.

Ainsi, selon une variante, l'invention concerne un produit alimentaire de type CPAC, qui contient :

* 40 à 95 % en poids de matières contenant de l'amidon
* 0 à 20 % en poids d'amidon natif ou modifié
* 2,5 à 25 % en poids de fibres
* 2,2 à 20 % en poids de sucre
* 0,1 à 5 % en poids de sel
* 0,1 à 1 % en poids de gommes
* 0,1 à 3 % en poids d'arômes hydrosolubles et/ou liposolubles,

la somme de ces constituants étant égale à 100 %, ledit produit alimentaire ayant une teneur en humidité comprise entre 9 et 11,5 % en poids et un degré de gélatinisation d'au moins 75 %, de préférence d'au moins 80 %, de préférence encore d'au moins 85 %.

Selon une autre variante, l'invention concerne un produit alimentaire de type PSA, qui contient

* 50 à 95 % en poids de matière contenant de l'amidon
* 3 à 20 % en poids d'amidon natif ou modifié
* 0 à 25 % en poids de fibres
* 1,7 à 20 % en poids de poudre de légumes
* 0,1 à 5 % en poids de sel
* 0,1 à 1 % en poids de gommes
* 0,1 à 3 % en poids d'arômes hydrosolubles et/ou liposolubles,

la somme de ces constituants étant égale à 100 %, ledit produit alimentaire ayant une teneur en humidité comprise entre 9 et 11,5 % en poids et un degré de gélatinisation d'au moins 75 %, de préférence d'au moins 80 %, de préférence encore d'au moins 90 %.

Dans la présente description et dans les revendications qui suivent, la teneur en amidon du produit alimentaire conforme à l'invention est définie comme la somme de la quantité d'amidon contenue dans la matière contenant de l'amidon et de la quantité d'amidon natif ou modifié entrant dans la composition dudit produit.

La matière contenant de l'amidon utilisable dans le cadre de l'invention peut être notamment une farine de céréale, telle que par exemple une farine de blé, de maïs, d'orge ou d'avoine, ou un mélange de ces farines ; ou bien cette matière peut être une autre source d'amidon, comme par exemple du manioc, de la pomme de terre ou du riz. De préférence, cette matière contient de 60 à 90 % d'amidon.

L'amidon natif ou modifié utilisable selon l'invention est par exemple choisi parmi l'amidon natif de blé, de maïs (normal, riche en amylopectine ou riche en amylose) ou de riz (normal ou riche en amylopectine), l'amidon natif de blé étant préféré. Par amidon natif, on entend un amidon qui n'a pas subi de traitement chimique et peut être utilisé sans restriction d'emploi. Par amidon modifié, on entend un amidon ayant subi des modifications chimiques (réticulation ou substitution de type estérification ou étherification) en vue d'améliorer leur propriétés fonctionnelles, notamment une meilleure résistance au cisaillement. Ces amidons sont soumis à des restrictions d'emploi et sont déclarés comme additifs. A titre d'exemple d'amidon modifié, on peut citer les amidons modifiés (amidon acétylé à réticulation adipique) précuits à base de maïs cireux qui, dans certains cas, peuvent améliorer le niveau d'expansion et la qualité de surface du produit.

Les fibres adaptées au produit alimentaire selon l'invention comprennent les sons issus de céréales, comme par exemple le son de blé, de maïs ou d'avoine, et les fibres issues d'autres variétés, comme par exemple les fibres de pois.

On peut utiliser de la poudre de n'importe quel légume dans la composition du produit alimentaire conforme à l'invention. A titre d'exemple, on citera la poudre de tomate, d'épinard, de carotte, de céleri, d'oignon ou d'ail.

Les gommes utilisables dans la composition du produit alimentaire conforme à l'invention comprennent notamment le xanthane, le guar, la caroube, de préférence le xanthane ou le guar.

Les arômes hydrosolubles et liposolubles qui conviennent pour le produit alimentaire conforme à l'invention sont par exemple caramel, chocolat, miel, tomate ou pizza. Ces produits sont disponibles dans le commerce.

L'amidon contenu dans la matière source d'amidon permet l'expansion du produit. Les gommes ont un rôle de stabilisant et de répartiteur d'eau dans le pellet. L'aromatisation est réalisée avec deux arômes dont le comportement est différent au moment de l'expansion. L'arôme liposoluble est utilisé pour conserver le potentiel arômatisant et participer au goût du produit, le second arôme, hydrosoluble, est utilisé pour se volatiliser au moment de la vaporisation de l'eau sous l'effet des micro-ondes et contribuer ainsi à l'arôme dégagé.

Le produit alimentaire conforme à l'invention peut en outre contenir un ou plusieurs ingrédients et/ou additifs alimentaires choisis parmi les agents de texture, les colorants, les arômes, les agents anti-oxydants, les acidifiants ou correcteurs d'acidité, les émulsifiants, les épaississants, les édulcorants, les polyols ou les exhausteurs de goût.

Le produit alimentaire du type pellet conforme à l'invention est conditionné dans un emballage de type "suscepteur".

La naissance des emballages suscepteurs, également appelés "emballages actifs", est récente puisqu'elle est liée au développement de l'utilisation du four micro-ondes domestique. Ils sont constitués d'un film polymère et d'un additif. L'additif est métallique, il s'agit essentiellement de l'aluminium. Le film suscepteur produit, sous l'influence d'un champ électromagnétique, un champ thermique et assure ainsi une bonne homogénéisation thermique. Les films suscepteurs en créant un champ induit et indépendant de la cavité du four micro-ondes évitent les problèmes d'hétérogénéité.

L'emballage utilisé selon l'invention est composé d'un suscepteur, de préférence de type polyéthylène téréphtalate (PET) légèrement métallisé, contrecollé sur papier ou kraft. La métallisation (dépôt aluminium) peut être continue ou présenter des "perforations" ; dans ce cas il s'agit de suscepteurs démétallisés. L'aluminium déposé représente une épaisseur inférieure à 20 Å, la conductivité résultant de cette métallisation est de 50 à 200 ohms/m$^2$. La métallisation est réalisée sur un PET pour ses propriétés de thermorésistance, la température dépassant 200° C lors de l'expansion. Le PET métallisé est contrecollé sur papier ou kraft, de préférence sur kraft, de grammage compris entre 30 et 100 g/m$^2$. Pour éviter que la phase aluminium se retrouve en contact direct avec les pellets, un film protecteur, de préférence un kraft de faible grammage (< 20 g/m$^2$) est utilisé. Le contrecollage de l'ensemble prend ainsi le suscepteur en "sandwich" entre les krafts d'épaisseurs différentes. La phase aluminium pourra être disposée au dessous ou au dessus des pellets mais de préférence et pour éviter un surchauffement elle sera disposée sous les pellets.

Les pellets utilisés étant sensibles aux variations d'humidité relative, l'emballage utilisé selon l'invention devra présenter de très bonnes propriétés barrière à la vapeur d'eau, avec une perméabilité à l'eau généralement inférieure à 10 g/m$^2$/24 h, de préférence inférieure à 3 g/m$^2$/24 h à 38° C sous une humidité relative de 90 %. Pour ce faire, on peut utiliser par exemple un suremballage de préférence en polypropylène (PP) présentant une perméabilité à l'eau < 10 g/m$^2$/24h à 38° C sous une humidité relative de 90 %, d'épaisseur comprise entre 10 et 60 μm ou bien utiliser un kraft enduit où l'enduction, hydrophobe, est réalisée généralement avec une base acrylique présentant un perméabilité à l'eau <3 g/m$^2$/24h à 38° C sous une humidité relative de 90 %.

De préférence, l'emballage conforme à l'invention est un kraft non enduit de grammage compris entre 30 et 100 g/m$^2$ avec un suremballage en polypropylène tel que défini ci-dessus.

Une répartition monocouche des pellets sur le suscepteur garantit un meilleur échange thermique et améliore la qualité d'expansion. Le conditionnement pourra donc être réalisé sous vide de façon à garantir cette répartition monocouche.

Cet emballage composite intégrant un suscepteur permet, lors du passage au four micro-ondes domestique ou dans un système de distribution automatique des pellets intégrant une source de micro-ondes, d'homogénéiser les champs induits et de transformer une partie de l'énergie électromagnétique en énergie thermique permettant ainsi d'initialiser l'expansion. Les pellets recoivent ainsi de l'énergie électromagnétique (micro-ondes) pour un chauffage au coeur du produit et de l'énergie thermique (libérée par le suscepteur) pour un chauffage à la périphérie, permettant par synergie de faciliter la vaporisation de l'eau et d'améliorer les qualités d'expansion.

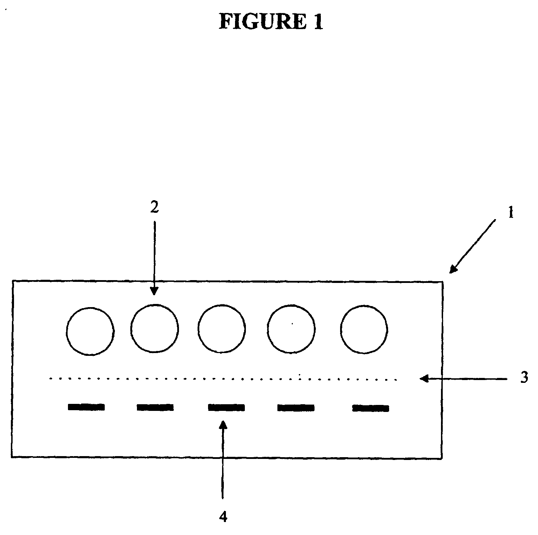

La figure 1 représente un mode de réalisation du produit alimentaire conforme à l'invention, conditionné dans un emballage de type suscepteur. Cet emballage 1 comprend des pellets 2 qui sont séparés de la phase métallique 4 par un film protecteur 3.

Le produit alimentaire de type pellet conforme à l'invention apporte au consommateur les avantages suivants :

- une longue conservation des pellets du fait de leur faible humidité
- un potentiel de forme très élevé
- un changement d'état au cours de l'expansion
- un produit sans matières grasses
- un produit fini consommable à chaud
- un dégagement d'arôme au cours de l'expansion et donc à l'ouverture du sachet.

Le produit alimentaire conforme à l'invention possède donc des propriétés organoleptiques améliorées lorsqu'il est consommé à chaud, tout en étant dépourvu de matières grasses.

Les produits alimentaires de type pellet selon l'invention sont donc préparés par le procédé qui consiste à :

a) extruder dans un premier extrudeur le mélange des composants avec une teneur en humidité comprise entre 29 et 35 % en poids, en apportant une énergie mécanique comprise entre 50 et 400 kWh/t et une énergie thermique comprise entre 10 et 150 kWh/t :

b) couper en sortie de premier extrudeur des granulés de matière extrudée et les transférer vers un second extrudeur ;

c) extruder lesdits granulés pour obtenir en sortie de second extrudeur des pellets de forme désirée ; et

d) présécher les pellets jusqu'à une teneur en humidité de 20 à 25 % en poids, puis les sécher jusqu'à la teneur en humidité voulue, comprise entre 9 et 11,5 % en poids; et

e) conditionner les pellets obtenus dans un emballage de type suscepteur.

Ainsi, on extrude tout d'abord dans un premier extrudeur le mélange des composants constitutifs du pellet

Pour arriver au niveau de gélatinisation voulu, le mélange est extrudé en apportant de l'énergie mécanique par une configuration de vis intégrant des éléments malaxeurs et contre filet et en travaillant avec une teneur humidité totale à l'intérieur de l'extrudeur comprise entre 29 % et 35 % en poids. L'ensemble de ces paramètres détermine la quantité d'énergie mécanique transmise au produit, qui est plus ou moins cisaillé par la vis de l'extrudeur selon la configuration et la vitesse de rotation de celle-ci.

Cette énergie mécanique spécifique est comprise entre 50 et 400 kWh/t, de préférence entre 100 et 300 kWh/t.

En parallèle, une forte quantité d'énergie thermique comprise entre 10 et 150 kWh/t, de préférence entre 30 et 120 kWh/t est apportée à l'extrudeur. Cette énergie thermique transmise au produit participe également à la gélatinisation du produit. Avantageusement, on applique un barème de température de 100 à 140°C sur 50 à 75 % de la longueur de l'extrudeur, et un barème de température de 30 à 50°C sur les 25 à 50 % restants de la longueur de l'extrudeur, afin de permettre en sortie d'extrudeur la coupe des granulés avant formage. De préférence, on applique un barème de température de 100 à 140°C sur les 3 premiers/4 de la longueur de l'extrudeur, et un barème de température de 30 à 50°C sur le dernier 1/4 de la longueur de l'extrudeur.

L'énergie totale apportée au produit est définie comme la somme de l'énergie mécanique et de l'énergie thermique. Cette énergie totale transmise permet la gélatinisation de l'amidon qui est d'autant plus forte que l'énergie apportée est importante. C'est le niveau de gélatinisation de l'amidon qui s'est avéré déterminant pour l'expansion du produit et donc sa texture finale après passage au four micro-ondes.

L'énergie totale est comprise entre 60 kWh/t et 550 kWh/t, de préférence entre 130 kWh/t et 420 kWh/t.

La matière amylacée sortant de ce premier extrudeur est alors coupée en granulés qui sont transférés vers un second extrudeur pour y être extrudés à une température comprise entre 15°C et 60°C.

Les pellets obtenus en sortie de deuxième extrudeur sont ensuite préséchés jusqu'à une teneur en humidité de 20 % à 25 % en poids, puis séchés jusqu'à une teneur en humidité comprise entre 9 % et 11,5 % en poids.

Avantageusement, les pellets ainsi obtenus ont une taille inférieure à 40 mm et une épaisseur inférieure à 4 mm.

La forme des pellets dépend de la forme de la filière du second extrudeur et des équipements satellites supplémentaires mis en oeuvre pour élargir ce potentiel de formes (laminoir, estampeur,...). Il est ainsi possible d'obtenir des formes géométriques, telles que par exemple une sphère, un cône ou un ellipsoïde, ainsi que des formes telles que des anneaux, des étoiles ou des figurines (par exemple des animaux, des plantes, des bateaux, des avions ou des personnages).

Les pellets sont ensuite conditionnés, préférentiellement, par sachets de 20 à 150 g, lesdits sachets étant constitués de l'emballage intégrant un suscepteur tel que défini précédemment. Une notice d'utilisation est imprimée sur l'emballage et reprend principalement les caractéristiques des fours micro-ondes domestiques. De préférence, il s'agit d'une matrice à double entrée reprenant le volume du four ainsi que sa puissance commerciale et indique le temps d'expansion optimal en fonction de ces paramètres, de préférence en fonction du volume du four. Ce temps d'expansion est compris entre 30 secondes et 2 minutes à puissance maximale.

L'invention concerne donc, selon un autre de ses aspects, un procédé pour réchauffer et expanser le produit alimentaire conforme à l'invention, qui consiste à adapter le temps d'expansion des pellets en fonction du volume et de la puissance du four micro-ondes utilisé. L'invention concerne aussi le produit alimentaire expansé ainsi obtenu.

L'invention va maintenant être décrite en référence aux tests et exemples suivants, donnés à titre illustratif.

**Test 1 :** Dosage de l'humidité

On broye l'échantillon 2 minutes dans un broyeur équipé d'un système de refroidissement (commercialisé par IKA) puis on pèse environ 5 g d'échantillon (soit $P_1$) que l'on sèche 4 heures à 130°C +/- 1°C.

On pèse de nouveau l'échantillon après séchage (soit $P_2$).

La teneur en humidité est déterminée par la relation :

$$humidité\ (\%) = \frac{P_2 - P_1}{P_1} \times 100$$

La valeur définitive de la teneur en humidité est donnée par la moyenne de deux expériences.

**Test 2** : Détermination du degré de gélatinisation

Cette détermination s'effectue d'après la méthode décrite par Birch et Priestley dans Die Stärke, 25 (3), 98-100 (1973).

On pèse 2 fois 200 mg d'échantillon broyé dans le même broyeur que celui utilisé dans le test 1.

On traite 200 mg de cet échantillon par 100 ml de KOH 0,2 M sous agitation pendant 10 minutes et 200 mg par 100 ml de KOH 0,4 M, sous agitation pendant 10 minutes. On centrifuge à 3000 tr/min pendant 10 minutes, puis on prélève 1 ml de surnageant de l'échantillon traité par KOH 0,2 M qu'on neutralise avec HCl 0,2 N (1 ml) en ajustant à 20 ml dans un tube de 25 ml. De même, on prélève 1 ml de surnageant de l'échantillon traité par KOH 0,4 M qu'on neutralise avec HCl 0,2 N (2 ml) en ajustant à 20 ml dans un tube de 25 ml.

On additionne dans chaque tube 100 µl de réactif iodé (1 g $I_2$ + 4 g de K1 dans 100 ml d'eau), on mélange délicatement le tout puis on détermine l'absorbance à 600 nm de chaque échantillon.

Le degré de gélatinisation est calculé d'après l'équation :

$$Degré\ de\ gélatinisation\ (\%) = [DOE_{0,2M}/DOE_{0,4M}] \times 100$$

où $DOE_{0,2}$ et $DOE_{0,4}$ représentent respectivement la densité optique des échantillons traités par KOH 0,2M et KOH 0,4M.

**Exemple 1:** Produit sucré pour petit déjeuner

*1 - Formulation (% en poids)*

- farine de blé     48,5
- farine de maïs      30

- sucre        12
- son de blé        5
- malt        2
- sel        1
- guar        0,5
- arôme liposoluble "caramel"        0,5
- arôme hydrosoluble "caramel"        0,5

*2- Conditions d'extrusion*

∗ matériel : extrudeur BC45 couplé avec un formeur F20 Mapimpianti
∗ paramètres :

- configuration de vis du BC45 avec disques malaxeurs et contre filet
- humidité extrudeur : 30 %
- barème de température : 120°C sur les 3 premiers/4 de l'extrudeur et 30°C sur le dernier 1/4.
- Energie mécanique : 140 kWh/t
                ⇒ Energie totale : 220 kWh/t
- Energie thermique : 80 kWh/t

∗ après formage, les pellets sont séchés pour obtenir une humidité de 10,5 %

*3- Caractéristiques des pellets*

- forme : poisson        longueur : 17 mm        épaisseur : 2 mm
- humidité : 10,5 %
- degré de gélatinisation : 85 %
- conditionnement : sachet de 30 g.

**Exemple 2** : Produit salé pour apéritif sans matières grasses

*1- Formulation (% en poids)*

- farine de blé        38

- farine de maïs        38

- amidon natif de blé        15

- poudre de tomate        5

- sel        2,5

- xanthane        0,5

- arôme liposoluble "pizza"        0,5

- arôme hydrosoluble "pizza"        0,5

*2- Conditions d'extrusion*

* matériel : extrudeur BC45 couplé à un formeur F20 Mapimpianti
* paramètres :

  - configuration de vis du BC45 avec disques malaxeurs et contre filet
  - humidité extrudeur : 31 %
  - barème de température : 130°C sur les 3 premiers/4 de l'extrudeur et 30°C sur le dernier 1/4
  - Energie mécanique : 180 kWh/t
        ⇒ Energie totale : 280 kWh/t
  - Energie thermique : 100 kWh/t

* après formage, les pellets sont séchés pour obtenir une humidité de 10,5 %

*3- Caractéristiques des pellets*

  - forme : roue      longueur : 20 mm      épaisseur : 2 mm
  - humidité : 10,5 %
  - degré de gélatinisation : 90 %
  - conditionnement : sachet de 50 g.


**Revendications**

1. Procédé de préparation d'un produit alimentaire de type pellet expansable aux micro-ondes, contenant au moins 40 % d'amidon et possédant une teneur en humidité comprise entre 9 et 11,5 % en poids et un degré de gélatinisation d'au moins 75 %, ledit produit étant conditionné dans un emballage de type suscepteur, procédé qui consiste à :

   a) extruder dans un premier extrudeur le mélange des composants avec une teneur en humidité comprise entre 29 et 35 % en poids, en apportant une énergie mécanique comprise entre 50 et 400 kWh/t et une énergie thermique comprise entre 10 et 150 kWh/t ;
   b) couper en sortie de premier extrudeur des granulés de matière extrudée et les transférer vers un second extrudeur ;
   c) extruder lesdits granulés pour obtenir en sortie de second extrudeur des pellets de forme désirée ;
   d) présécher les pellets jusqu'à une teneur en humidité de 20 à 25 % en poids, puis les sécher jusqu'à une teneur en humidité comprise entre 9 et 11,5 % en poids ; et
   e) conditionner les pellets obtenus dans un emballage de type suscepteur.

2. Procédé selon la revendication 1, pour la préparation d'un produit alimentaire contenant en outre une gomme.

3. Procédé selon la revendication 1 ou 2, pour la préparation d'un produit alimentaire contenant :

   * 40 à 99,7 % en poids de matière contenant de l'amidon
   * 0 à 20 % en poids d'amidon natif ou modifié
   * 0 à 25 % en poids de fibres
   * 0 à 20 % en poids de poudre de légumes
   * 0 à 20 % en poids de sucre
   * 0,1 à 5 % en poids de sel
   * 0,1 à 1 % en poids de gommes
   * 0,1 à 3 % en poids d'arômes hydrosolubles et/ou liposolubles,

   la somme de ces constituants étant égale à 100 %.

**4.** Procédé selon l'une des revendications 1 à 3, pour la préparation d'une céréale prête à consommer contenant :

* 40 à 95 % en poids de matière contenant de l'amidon
* 0 à 20 % en poids d'amidon natif ou modifié
* 2,5 à 25 % en poids de fibres
* 2,2 à 20 % en poids de sucre
* 0,1 à 5 % en poids de sel
* 0,1 à 1 % en poids de gommes
* 0,1 à 3 % en poids d'arômes hydrosolubles et/ou liposolubles,

la somme de ces constituants étant égale à 100 %.

**5.** Procédé selon la revendication 4, dans lequel la céréale prête à consommer possède un degré de gélatinisation d'au moins 85 %.

**6.** Procédé selon l'une des revendications 1 à 3, pour la préparation d'un produit salé pour l'apéritif contenant :

* 50 à 95 % en poids de matière contenant de l'amidon
* 3 à 20 % en poids d'amidon natif ou modifié
* 0 à 25 % en poids de fibre
* 1,7 à 20 % en poids de poudre de légumes
* 0,1 à 5 % en poids de sel
* 0,1 à 1 % en poids de gommes
* 0,1 à 3 % en poids d'arômes hydrosolubles et/ou liposolubles,

la somme de ces constituants étant égale à 100 %.

**7.** Procédé selon la revendication 6, dans lequel le produit salé pour l'apéritif possède un degré de gélatinisation d'au moins 90 %.

**8.** Procédé selon l'une des revendications 1 à 7, dans lequel à l'étape a) on utilise une matière contenant de l'amidon constituée par une farine de céréale ou un mélange de farines de céréale.

**9.** Procédé selon la revendication 8, dans lequel la farine de céréale est choisie parmi la farine de blé, la farine de maïs, la farine d'avoine ou la farine d'orge.

**10.** Procédé selon l'une des revendications 1 à 9, dans lequel à l'étape e) on utilise un suscepteur de type polyéthylène téréphtalate métallisé avec de l'aluminium, le film de polyéthylène téréphthalate étant contrecollé sur papier ou kraft, et on sépare le produit alimentaire de la phase métallique par un film protecteur.

**11.** Procédé selon la revendication 10, dans lequel la conductivité du suscepteur est comprise entre 50 et 200 ohms/$m^2$ et la densité du papier ou du kraft est comprise entre 30 et 100 $g/m^2$.

**Patentansprüche**

**1.** Verfahren zur Herstellung eines Nahrungsmittels in Form eines durch Mikrowellen aufschäumbaren Pellets, das mindestens 40% Stärke enthält und einen Feuchtigkeitsgehalt zwischen 9 bis 11,5 Gew.-% umfasst und einen Verkleisterungsgrad von mindestens 75%, wobei das Produkt in einer Verpackung in Form eines Suszeptors abgepackt ist, wobei das Verfahren aus:

a) Extrudieren der Mischung der Bestandteile mit einem Feuchtigkeitsgehalt, der zwischen 29 und 35 Gew.-% umfasst in einem ersten Extruder, durch Ausüben einer mechanischen Energie, die zwischen 50 und 400 kWh/t umfasst und einer thermischen Energie, die zwischen 10 und 150 kWh/t umfasst;

b) das Schneiden von Granula der extrudierten Masse beim Austreten aus dem ersten Extruder, und das Überführen dieser in einen zweiten Extruder;

c) Extrudieren dieser Granula, um beim Heraustreten aus dem zweiten Extruder Pellets der gewünschten Form zu erhalten;

d) Vortrocknen der Pellets bis zu einem Feuchtigkeitsgehalt von 20 bis 25 Gew.-%, danach Trocknen derselben bis zu einem Feuchtigkeitsgehalt, der zwischen 9 und 11,5 Gew.-% umfasst; und

e) Abpacken der erhaltenen Pellets in einer Verpackung in Form eines Suszeptors,

besteht.

2. Verfahren gemäß Anspruch 1 zur Herstellung eines Nahrungsmittels, das unter anderem ein Gumm enthält.

3. Verfahren gemäß Anspruch 1 oder 2, zur Herstellung eines Nahrungsmittels, das enthält:

   * 40 bis 99,7 Gew.-% einer Masse, die Stärke enthält
   * 0 bis 20 Gew.-% ursprünglicher oder modifizierter Stärke
   * 0 bis 25 Gew.-% Faser
   * 0 bis 20 Gew.-% Gemüsepulver
   * 0 bis 20 Gew.-% Zucker
   * 0,1 bis 5 Gew.-% Salz
   * 0,1 bis 1 Gew.-% an Gummen
   * 0,1 bis 3 Gew.-% wasserlöslicher und/oder fettlöslicher Aromen, wobei die Summe dieser Bestandteile gleich 100% ist.

4. Verfahren gemäß einem der Ansprüche 1 bis 3 zur Herstellung eines konsumierfertigen Getreides, das enthält:

   * 40 bis 95 Gew.-% einer Masse, die Stärke enthält
   * 0 bis 20 Gew.-% ursprünglicher oder modifizierter Stärke
   * 2,5 bis 25 Gew.-% Faser
   * 2,2 bis 20 Gew.-% Zucker
   * 0,1 bis 5 Gew.-% Salz
   * 0,1 bis 1 Gew.-% an Gummen
   * 0,1 bis 3 Gew.-% wasserlöslicher und/oder fettlöslicher Aromen, wobei die Summe dieser Bestandteile gleich 100% ist.

5. Verfahren gemäß Anspruch 4, wobei das konsumierfertige Getreide einen Verkleisterungsgrad von mindestens 85% besitzt.

6. Verfahren gemäß einem der Ansprüche 1 bis 3 zur Herstellung eines gesalzenen Produktes zum Aperitif, das enthält:

   * 50 bis 95 Gew.-% einer Masse, die Stärke enthält
   * 3 bis 20 Gew.-% ursprünglicher oder modifizierter Stärke
   * 0 bis 25 Gew.-% Faser
   * 1,7 bis 20 Gew.-% Gemüsepulver
   * 0,1 bis 5 Gew.-% Salz
   * 0,1 bis 1 Gew.-% an Gummen
   * 0,1 bis 3 Gew.-% wasserlöslicher und/oder fettlöslicher Aromen, wobei die Summe dieser Bestandteile gleich 100% ist.

7. Verfahren gemäß Anspruch 6, wobei das gesalzene Produkt zum Aperitif einen Verkleisterungsgrad von mindestens 90% besitzt.

8. Verfahren gemäß einem der Ansprüche 1 bis 7, wobei im Schritt a) eine Masse, die Stärke enthält, verwendet wird, die aus einem Getreidemehl oder einer Mischung aus Getreidemehlen besteht.

9. Verfahren gemäß Anspruch 8, wobei das Getreidemehl aus Weizenmehl, Maismehl, Hafermehl oder Gerstenmehl ausgewählt ist.

10. Verfahren gemäß einem der Ansprüche 1 bis 9, wobei man im Schritt e) einen Suszeptor vom Typ Polyethylenterephthalat verwendet, der mit Aluminium metallisiert ist, wobei die Polyethylenterephthalatschicht auf Papier oder Kraftpapier kaschiert ist, und man das Nahrungsmittel von der Metallschicht durch eine Schutzschicht trennt.

11. Verfahren gemäß Anspruch 10, wobei die Leitfähigkeit des Suszeptors zwischen 50 und 200 Ohm/m$^2$ umfasst und die Dichte des Papiers oder des Kraftpapiers zwischen 30 und 100 g/m$^2$ liegt.

**Claims**

1. A process for the preparation of a microwave-expandable pellet-type food product containing at least 40% of starch and having a moisture content of between 9 and 11.5% by weight and a degree of gelatinization of at least 75%, said product being packed in a susceptor-type packaging, in which process:

   a) a mixture of the components is extruded with a moisture content of between 29 and 35% by weight in a first extruder with the supply of a mechanical energy of between 50 and 400 kWh/t and a thermal energy of between 10 and 150 kWh/t;
   b) the extruded material is chopped into granules at the outlet of the first extruder and transferred to a second extruder;
   c) said granules are extruded to give pellets of the desired shape at the outlet of the second extruder;
   d) the pellets are predried to a moisture content of 20 to 25% by weight and then dried to a moisture content of between 9 and 11.5% by weight; and
   e) the pellets obtained are packed in a susceptor-type packaging.

2. The process according to claim 1 for the preparation of a food product which also contains a gum.

3. The process according to claim 1 or 2 for the preparation of a food product containing:

   * 40 to 99.7% by weight of starch-containing material
   * 0 to 20% by weight of native or modified starch
   * 0 to 25% by weight of fibre
   * 0 to 20% by weight of vegetable powder
   * 0 to 20% by weight of sugar
   * 0.1 to 5% by weight of salt
   * 0.1 to 1% by weight of gum
   * 0.1 to 3% by weight of water-soluble and/or liposoluble flavourings,

   the sum of these constituents being equal to 100%.

4. The process according to one of claims 1 to 3 for the preparation of a ready-to-eat cereal containing:

   * 40 to 95% by weight of starch-containing material
   * 0 to 20% by weight of native or modified starch
   * 2.5 to 25% by weight of fibre
   * 2.2 to 20% by weight of sugar
   * 0.1 to 5% by weight of salt
   * 0.1 to 1% by weight of gum
   * 0.1 to 3% by weight of water-soluble and/or liposoluble flavourings,

   the sum of these constituents being equal to 100%.

5. The process according to claim 4 in which the ready-to-eat cereal has a degree of gelatinization of at least 85%.

6. The process according to one of claims 1 to 3 for the preparation of a savoury aperitif snack containing:

   * 50 to 95% by weight of starch-containing material
   * 3 to 20% by weight of native or modified starch
   * 0 to 25% by weight of fibre

&ast; 1.7 to 20% by weight of vegetable powder

&ast; 0.1 to 5% by weight of salt

&ast; 0.1 to 1% by weight of gum

&ast; 0.1 to 3% by weight of water-soluble and/or liposoluble flavourings,

the sum of these constituents being equal to 100%.

7. The process according to claim 6 in which the savoury aperitif snack has a degree of gelatinization of at least 90%.

8. The process according to one of claims 1 to 7 in which the starch-containing material used in step a) consists of a cereal flour or a mixture of cereal flours.

9. The process according to claim 8 in which the cereal flour is selected from wheat flour, maize flour, oat flour and barley flour.

10. Process according to one of claims 1 to 9 in which the susceptor used in step e) is of the polyethylene terephthalate type metallized with aluminum, the polyethylene terephthalate film being laminated on paper or kraft, and the food product is separated from the metallic phase by a protective film.

11. The process according to claim 10 in which the conductivity of the susceptor is between 50 and 200 ohms/m$^2$ and the density of the paper or kraft is between 30 and 100 g/m$^2$.

# FIGURE 1